(19) Europäisches Patentamt
European Patent Office
Office européen des brevets

(11) EP 2 210 911 A1

(12) EUROPEAN PATENT APPLICATION

(43) Date of publication:
**28.07.2010 Bulletin 2010/30**

(21) Application number: **09151266.5**

(22) Date of filing: **23.01.2009**

(51) Int Cl.:
***C08G 63/52*** (2006.01) ***C08G 63/54*** (2006.01)
***C08F 257/00*** (2006.01) ***C08F 279/02*** (2006.01)
***C09D 151/00*** (2006.01) ***D21H 19/20*** (2006.01)
***B41M 5/52*** (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Advansa Sasa Polyester Sanay A.S.**
**34330 Istanbul (TR)**

(72) Inventors:
- **Baykam, Can**
  **34730, Istanbul (TR)**
- **Kucukaltun, Engin**
  **01280, Adana (TR)**

(74) Representative: **Bratt, Jan Henrik**
**Awapatent AB**
**Järnvägsgatan 10 A**
**P.O. Box 1066**
**S-251 10 Helsingborg (SE)**

(54) **Production of polymers**

(57) The present invention relates to a process for producing polymers, comprising the steps of: reaction of a mixture, comprising monomers and comonomers, said comonomers having double bonds, into reaction products comprising oligomers having at least one double bond; and meltpolymerisation of said oligomers into a polymer comprising double bonds in the backbone.

EP 2 210 911 A1

## Description

### Technical field of the invention

The present invention relates to a process for producing polymers. The invention further relates to a process for producing a product such as a container, film or fabric, from the polymers.

### Background art

The production of polymers is part of a very large industry, and polymers are used for manufacturing of a vast number of different products, such as containers, bottles, films, and fabrics. Plastic bottles for beverages, are for example often made from polymers of PET-type. In order to achieve good performance of the polymer, both during the manufacturing of the products, and for the later use of the product, certain properties of the polymers are needed, such as high intrinsic viscosities. During traditional production of PET, a polymerisation step is followed by an inefficient, time consuming, expensive, and low through-put step of solid state polymerisation, which requires large quantities of nitrogen. Such a step is a disadvantageous bottle neck in the production line.

### Summary of the invention

One purpose of the present invention relates to providing a novel process for producing polymers having at least one of longer polymer chains, higher molecular weights, higher intrinsic viscosity. Another purpose of the present invention relates to providing a novel process for producing polymers, followed by molding, extruding, or spinning of the polymers into products.

According to a first aspect, the present invention relates to a process for producing polymers, comprising the steps of reaction of a mixture, comprising monomers and comonomers, said comonomers having double bonds, into reaction products comprising oligomers having at least one double bond; meltpolymerisation of said oligomers into a polymer comprising double bonds in the backbone.

Reaction of a mixture comprising monomers and comonomers, may result in reaction products being oligomers, which oligomers is build from combinations of the monomers and the comonomers. Thus, the oligomers may comprise a product of one monomer and one comonomer. The oligomers may comprise a product of two monomers. The oligomers may comprise a product of two monomers and one comonomer. The oligomes may comprise a product of two comonomers and one monomer. Oligomers may also comprise larger number of monomers and/or comonomers, such as four, or larger.

The double bonds of the comonomers may result in the polymer comprising double bonds.

The comonomer may comprise the structure of structural formula 1:

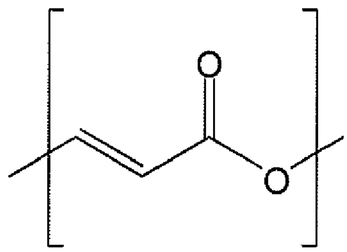

(1).

The carbon-carbon double bond in structure 1 may be referred to as a vinylic double bond or a vinyl double bond. Thus, the structure 1 comprise a vinyl group or a vinylic group represented by the formula:

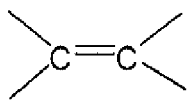

The vinylic group may be part of an acrylic group.

For the structural formulas presented within square brackets, the bonds going outside of the brackets should

be viewed as bearing an atom or a group or a molecule suitable for the invention. In a simple form the bonds may bear for example a hydrogen atom.

The comonomer, according to the invention, may comprise the structure of structural formula 2.

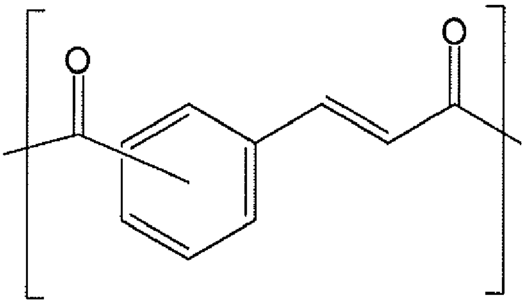

(2).

According to the present invention, the discussions, above and below, regarding the double bonds of the backbone, may regard solely the vinylic double bond of structural formula 1, 2 or 3. Thus, said discussions may, when suitable, not concern the aromatic double bonds of the aromatic ring, or the carbon-oxygen double bonds of the carbonyl groups, of the structural formula 1, 2, or 3.

The structural formula 2 may bring at least one double bond(s) into the backbone of the polymer. The bond between the carbonyl carbon and the benzene ring of structural formula 2, may be linked to any suitable non-occupied carbon of the benzene ring. Thus, with respect to the vinylic group of the structural formula 2, the bond between the carbonyl carbon and the benzene ring may be in ortho-, meta-, or para-position. It is preferred that the position is meta or para. The vinylic group of one polymer may be reactive towards a vinylic group of another polymer, and thus bond (s) may be formed between polymers involving the double bonds of the vinylic groups. It should be understood that in discussions concerning reactions including double bonds,

it may well be that the double bond is converted to a single bond during the reaction. Therefore the double bond may cease to exist during the reaction. However, even though a double bond may have ceased to exist during the reaction references may be made in the discussions, eg. to a bond between a group and such a double bond.

The polymer from the step of melt polymerisation may comprise a structural element described by structural formula 3:

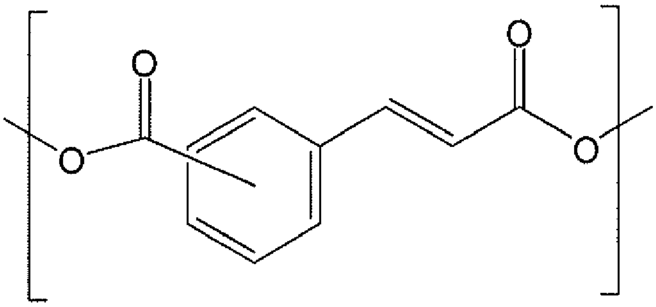

(3).

The structural formula 3 is relevant, for example, for polyesters according to the invention.

The polymer from the step of melt polymerisation may comprises a structural element described by structural formula 4:

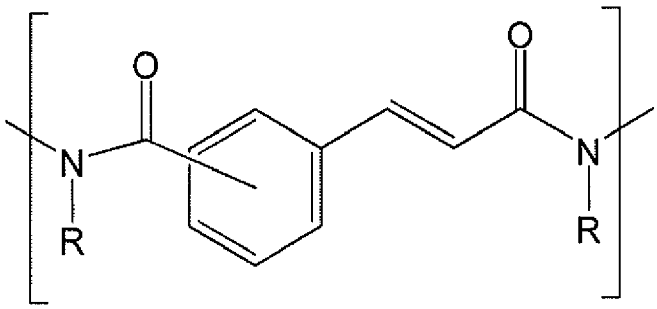

(4).

The structural formula (4) may be relevant, for example, for polyamides according to the invention. A group indicated by R, may for the case of structural formula 4, be a hydrogen atom, but it may be another atom or group which is suitable for the invention. The R to the left may indicate a different atom or group than the R to the right, or an identical group.

The discussions above regarding structural formula 2 are, where applicable, also relevant for structural formula 3 or 4.

The structural formula 2 and/or 3 may be comprised in a comonomer according to the invention. The comonomer may be defined by the structural formula 5, wherein $R_1$ and $R_2$ may be selected independently, and for example from the group comprising H, methyl, ethyl, propyl, butyl, $CH_3$, $C_2H_5$, $C_3H_7$, $C_4H_9$.

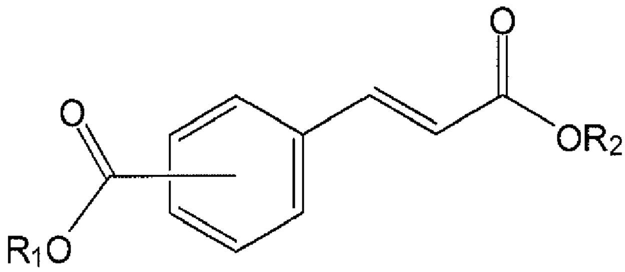

(5)

The discussions above regarding structural formula 2, 3, or 4 are, where applicable, also relevant for structural formula 5.

The comonomer according to the invention may be efficient for introducing a double bond or a vinylic bond in the backbone of a polymer. Such bonds may be efficient for further reactions involving the polymer. The double bonds may be used, for example, for growing of the polymer chains.

The process according to the invention may further comprise the step of growing of the polymer chains by means of exposure of the polymer chains to an initiator selected from the group comprising UV-light, radical initiator, or free radical.

According to one embodiment of the invention, the step of growing of the polymer chains comprises chemical binding of the polymer chains, which binding involves the vinylic double bond of structural formula 1, 2, 3 or 4.

The double bonds of the polymer may be used for growing of the polymers. The growing may result in, for example, longer polymer chains, and/or higher molecular weights of the polymers, and/or higher intrinsic viscosities, hereafter referred to as IV, of the polymers. For the case below where values of IV are given, the unit dL/g applies, and the IV is determined using a solution of 1,1,2,2,-tetrachloroethane and phenol (50% weight by weight), with an ubbelohde type of viscometer.

Exposure of the polymer chains to said initiator may result in said growing of the polymers.

The step of growing of the polymer chains may comprise chemical binding of the polymer chains, which binding involves said double bonds in the backbone.

Said double bonds in the backbone may be efficient for the chemical binding of the polymer chains. The chemical binding of the polymer chains may, for example, be predetermined by means of the number of double bonds or the position of the double bonds of the first polymer. For example, according to the invention, the chemical binding may result in polymers which are longer than the polymers formed in the melt polymerisation step. According to the invention, a low degree of cross-linking, or essentially no cross-linking, may occur. For example the double bonds may be at the

ends of the polymers from the melt-polymeisation step, which may result in prolongation of the polymers with no or a low degree of cross-linking of the polymers from the step of growing of the polymers. All double bonds of the polymers may not be involved in said chemical binding.

According to one embodiment of the invention, it may be preferred that 1 double bond per polymer chain is involved in the chemical bonding. For example 1, 2, 3, 4, 5, or more double bonds of a polymer chain may be involved in said chemical binding.

The chemical binding may, for example, be the forming of a covalent bond from reaction of said double bonds. Other bonds than covalent bonds, or interactions, between the polymer materials may also exist or be formed. For example ionic bonds, dipole interactions, hydrogen bonds, or Pi-interactions. Combinations of two or more of different types of bonds or interaction may exist, according to the invention.

The cross-linking density of the polymers resulting from the growing of the polymer chains may be 0-20%, such as 0.01-20%, 0.01-10%, 0.1-10%, 0.1-5%, or 0.1-1%. The cross-linking density may, for example, be 1-10%. The cross-linking density may refer to (the number of monomers and comonomers, of a polymer, being crosslinked)/(the number of monomers and comonomers, of a polymer, not being crosslinked).

The IV of the polymer from the meltpolymerisation step may be below 0.6. The IV of the polymer from the growing of the polymer chain step may be above the IV for the polymers from the step of melt polymerisation, and preferably above 0.6, and more preferably in the range of 0.6 -1.1. A higher IV may be beneficial in the further processing of the polymers, for example treatment according to molding, extruding or spinning. The IV of the polymers from the growing of the polymer chain step may be, for example, in the range of 0.6-1.1.

The growing of the polymer chain, according to the invention, may be preceded by a step of drying of the polymer.

Drying of the polymer may result in loss of water from the polymers. Drying of the polymer may result in more efficient growing of the polymer chain.

The steps of drying and growing, of the polymer chains, may occur simultaneously. The polymers from the step of melt polymerisation may be processed in a single step comprising drying of the polymer chains and growing of the polymer chains. For example the polymers may be dryed, during which drying the polymers are exposed to an initiator, which initiator may be selected from the group comprising UV-light, radical initiators, and free radicals, or combinations thereof.

The step of drying may be preceded by a step of cutting into granules the polymer from the of melt polymerisation step. Polymers in the shape of granules may be easy to handle and efficiently be treated accorded to the invention.

The polymer from the step of melt polymerisation may comprise a structural element described by structural formula 2, which structural element is present at Y-20, Y-10, Y-5, Y-2, Y-1, or Y-0.1% by weight of the polymer, or by weight of the monomers of the mixture, wherein Y ranges from 0.01-0.1%, for example, 0.01, 0.025, 0.05, 0.075, or 0.1%.

The comonomer may be present at Z-20, Z-10, Z-5, Z-2, Z-1, or Z-0.1% by weight of the polymer, or by weight of the monomers of the mixture, wherein Z ranges from 0.09-0.1%, for example, 0.01, 0.025, 0.05, 0.075, or 0.1%. According to one embodiment of the invention a concentration of 0.01-20% of comonomer by weight of the monomers of the mixture is preferred.

The chemical binding may be initiated by UV-light, radical initiators, or free radicals. UV-light, radical initiators, or free radicals may be used, for example, for initiating reactions between the double bonds of the polymers. The UV-light may for example comprise light with wavelengths between 100 nm and 400 nm, but UV light may also be considered to comprise other wavelengths, which may be used according to the invention. Other wavelengths that wavelengths comprised by UV light may also be suitable for the invention and may be used according to the invention.

The radical initiator may be selected from the group comprising: halogen molecules; azo compounds, comprising for example AIBN and ABCN; and organic peroxides, for example di-t(tertiary)-butylperoxide, Benzoyl peroxide, Methyl ethyl ketone peroxide, and acetone peroxide. Other radical initiators comprising the groups R-N=N-R', or R"-O-O-R"', that are useful according to the invention may be included in the group. Initiators may, for example, be selected from the group comprising Dibenzoylperoxide, t-butylhydroperoxide, lauroyl peroxide, di-t-butylperoxide, 2,5-dimethyl-2,5-di (t-butylperoxy) hexane, t-butylperbenzoate, 1,1,3,3-tetramethylbutyl hydroperoxide, 2,5-dimethyl-2,5-di(t-butylperoxy) hexane, 2,5-dimethylhexyl 2,5-diperoxybenzoate, and combinations thereof. Other suitable initiators may be used for the purpose.

According to the invention, the step of growing of the polymer chains may comprise chemical binding of the polymer chains, which binding involves said double bonds in the backbone. Such a binding may involve a linking group formed between the polymer chains. The linking group may be any group suitable to forming a link between the polymer chains. The linking group may comprise or be selected from the group comprising $S_2$, $CH_2$, $C_2H_4$, $C_3H_6$, $C_4H_8$, $C_5H_{10}$, $C_2H_2$, $C_3H_4$, vinyl group, and acryl group, and combinations thereof. Any suitable and known reagents or molecules may be used to form the linking group.

The polymer from the step of melt polymerisation may be, for example, a polyester or a polyamide. It may be preferred that the polymer is a polyester.

The monomer may be ethylene glycol, dialkyl terephthalate, or phthalic acid. Such monomers may be used in

synthesis of, for example polyesters. The monomers may further be different suitable diamines, for example etylenediamin. Such diamines may be used in synthesis of polyamides. For synthesis of polyamides, glycol may be replaced by diamine. Other monomers or comonomers suitable for preparing polymers, for example polyesters or polyamides, may be used according to the invention. Suitable combinations of the monomers above may be selected.

The mixture may comprise an initiator selected from the group consisting of Dibenzoylperoxide, t-butylhydroperoxide, lauroyl peroxide, di-t-butylperoxide, 2,5-dimethyl-2,5-di(t-butylperoxy) hexane, t-butylperbenzoate, 1,1,3,3-tetramethylbutyl hydroperoxide, 2,5-dimethyl-2,5-di(t-butylperoxy) hexane, 2,5-dimethylhexyl 2,5-diperoxybenzoate, and combinations thereof. Other suitable initiators may also be used for the purpose.

The step of reaction of said mixture, comprising monomers and comonomers, may be an ester interchange reaction. Such a step, comprising an ester interchange reaction, may be used in the production of polyesters.

According to a second aspect, the present invention relates to a process for producing a product, which process may comprise the process according to the invention as described above, and further comprising a step selected from the group consisting of molding, extruding or spinning. Such a step may be efficient for producing products from the polymers according to the invention.

The product may be for example a container, film, sheet, pipe, fabric or unsaturated polyester resins.

The discussions above concerning one aspect of the invention may be applied to the other aspect of the invention where applicable.

The polymer, according to the invention, may be a polyester or a polyamide. The polymer may also comprise a polyester or a polyamid, combined with other types of polymers.

## Brief description of the drawings

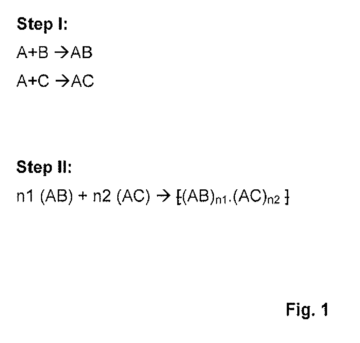

Fig. 1 is a schematic illustration of polymerisation, according to one embodiment of the invention.

## Detailed description of preferred embodiments of the invention

It should be emphasized that the preferred embodiments described herein in no way are limiting and that many alternative embodiments are possible within the scope of protection defined by the appended claims.

With references being made to fig. 1, a process for producing polymers according to the invention is hereby discussed. The process is divided in two steps, step I and step II.

Step I concerns reaction of a mixture comprising monomers (A, B) and comonomers (C), which comonomers have double bonds. The products from the reaction of step I are oligomers (comprising for example AB and AC).

Step II concerns melt polymerisation of the oligomers from step I, in which step polymers are formed.

Step I may be, for example, a transesterification reaction. The monomers A and B may be of different types, and they may be for example ethylene glycol, dialkyl terephthalate, or phthalic acid. The comonomer may, for example, be described by structure formula 5, whereby the groups $R_1$ and $R_2$ may be alkyl groups, and for example methyl or ethyl groups.

The monomers and comonomers of step I are brought in contact suitably and according to what is known to a man skilled in the art, such that oligomers are formed from the monomers. Suitable catalysts may be present for that purpose, and suitable polymerisation conditions are realised.

For step II, the oligomers from step I are brought together and polymer chains are formed. The polymer chains may be described by the formula:

$$-\left[(AB)_{n1}.(AC)_{n2}\right]-$$

Wherein n1 is an integer of one or higher, and n2 is an integer of one or higher, such that the sum of n1 and n2 is ten or larger.

Both steps I and II are catalysed. Step I is conducted under mild pressure (<1bar), where as the Step II is conducted under very low pressure or vacuum (<3mmHg abs.)

The steps I and II may be followed by additional steps, for example drying and/or growing. The growing may comprise by solid state polymerization. For the growing, conditions are realised such that the double bonds, originating from the comonomers, of the polymers are reacting such that chemical bonds are formed between them. The polymer chains from step II, thus, may become branched or even crosslinked.

In step I, suitable monomers and the comonomers according to the invention are brought together. The comonomer thus may take part in a randomly organised ester interchange reaction with removal of excess water and alcohols. The monomer mix may then be polymerised under vacuum in step II, where the comonomers according to the invention, comprising double bonds, takes place in the growing chain randomly. The melt polymerisation may be terminated or quenched such that the double bonds are positioned amongst the last 20% of the building blocks of the polymer, wherein the building blocks may be for example monomers or comonomers, or such that the double bonds of the polymers are positioned anywhere of the polymer chains, as the end building block of the polymer chains. Such positions of the double bonds in the backbone of the polymer chains may result in efficient prolongation of the polymer chains during the step of growing of the polymer chains, and such positions of the double bonds in the backbone of the polymer chains may result in a low degree of branching or no branching of the polymer chains during the step of growing of the polymer chains.

Example 1 - Polymerisation

100 g of dimethylterepthalate (DMT), 55 g monoethylene glycol (MEG), 0.54 g 1-Methyl 4-(2-carboxyvinyl) benzoate monomer, 0.05 g antimony trioxide ($Sb_2O_3$) and 0.034 g of manganese triacetate ($Mn(OAc)_2.5H_2O$) were placed into a 250ml round-bottom-flask, equipped with reflux condenser, nitrogen bleed and a stirrer.

The flask was placed into an oil bath, nitrogen bleed was started, and the oil bath was heated at a rate of 5°C/minute, until DMT had melted completely. Boiling started at 140°C and methanol started to reflux.

Reflux condenser was converted to distillation and methanol was distilled off at 65°C. The reflux temperature was increased to 196°C after the methanol evolution was completed (33 g) and MEG distillation started.

0.03 gr of 20% phosphoric acid was added to the mixture, which was stirred for 2 minutes under nitrogen atmosphere. Nitrogen bleed was stopped and replaced by vacuum. The vacuum was maintained at 5 mmHg at 285°C until most of the excess MEG was removed (22 g), during 30 minutes. The remaining reaction was conducted at 0.5 mmHg and 290°C. MEG distillation completed after 2 hours. Vacuum was replaced by nitrogen, the heating and the stirring was stopped and the flask adjusted to room temperature. The flask was broken and the resultant polymer was crushed into flakes. At this stage, the formed polymer had an IV of 0.35-0.7.

**Claims**

1. A process for producing polymers, comprising the steps of:

   - reaction of a mixture, comprising monomers and comonomers, said comonomers having double bonds, into reaction products comprising oligomers having at least one double bond
   - meltpolymerisation of said oligomers into a polymer comprising double bonds in the backbone.

2. Process according to any one of the preceding claims, wherein the comonomer comprises the structure of structural formula 1

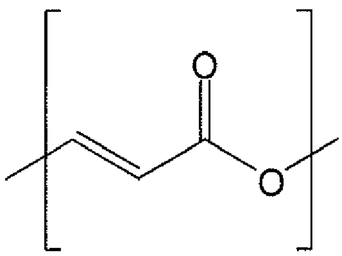

(1).

3. Process according to any one of the preceding claims, wherein the comonomer comprises the structure of structural formula 2

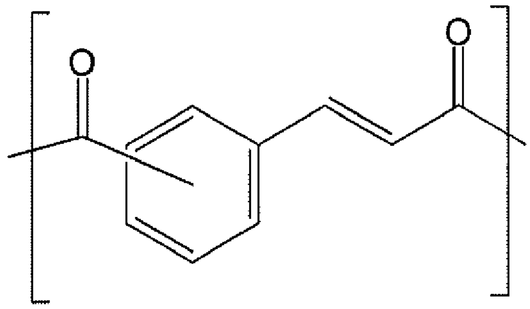

(2).

4. Process according to anyone of the preceding claims, further comprising the step of:

- growing of the polymer chains by means of exposure of the polymer chains to an initiator selected from the group comprising UV-light, radical initiator, or free radical.

5. Process according to claim 5, wherein the step of growing of the polymer chains comprises chemical binding of the polymer chains, which binding involves said double bonds in the backbone.

6. Process according to claim 5, wherein the cross-linking density of the polymers resulting from the growing of the polymer chains is 0.0-20.0%.

7. Process according to any one of claims 5 to 6, wherin the IV of the polymer from the growing of the polymer chain step is larger than the IV for the polymers from the step of melt polymerisation, and preferably larger than 0.6, and more preferably in the range of 0.6-1.1.

8. Process according to anyone of claims 5 to 7, wherein the growing of the polymer chain is preceded by a step of:

- drying of the polymer.

9. Process according to claim 8, wherein the steps of drying and growing occurs simultaneously.

10. Process according to claims 8 or 9, wherein the step of drying is preceded by a step of cutting into granules the polymer from the melt polymerisation step.

11. Process according to any one of the preceding claims, wherein the comonomer is present at 0.01-20.0% by weight of the polymer.

12. Process according to any one of the preceding claims, wherein the polymer is a polyester or a polyamide.

13. Process according to any one of the preceding claims, wherein the monomers are selected from the group consisting of ethylene glycol, dialkyl terephthalate, or phthalic acid.

14. Process according to any one of the preceding claims 4-13, wherein the mixture comprises an initiator selected from the group consisting of Dibenzoylperoxide, t-butylhydroperoxide, lauroyl peroxide, di-t-butylperoxide, 2,5-dimethyl-2,5-di(t-butylperoxy) hexane, t-butylperbenzoate, 1,1,3,3-tetramethylbutyl hydroperoxide, 2,5-dimethyl-2,5-di (t-butylperoxy) hexane, 2,5-dimethylhexyl 2,5-diperoxybenzoate.

15. A process for producing a product comprising the process according any one of the preceding claims, further comprising a step selected from the group consisting of molding, extruding or spinning.

16. A polymer obtainable by the process according to any one of claims 1-15.

**Step I:**

$A+B \rightarrow AB$

$A+C \rightarrow AC$

**Step II:**

$n1\ (AB) + n2\ (AC) \rightarrow [(AB)_{n1}.(AC)_{n2}]$

Fig. 1

Europäisches Patentamt
European Patent Office
Office européen des brevets

# EUROPEAN SEARCH REPORT

Application Number
EP 09 15 1266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/227925 A1 (PRETZER WAYNE R [US]) 18 September 2008 (2008-09-18) * claims 1-34; examples 1-12 * | 1-16 | INV. C08G63/52 C08G63/54 C08F257/00 C08F279/02 C09D151/00 D21H19/20 B41M5/52 |
| X | US 6 699 945 B1 (CHEN LIANG [US] ET AL) 2 March 2004 (2004-03-02) * claims 1-24; examples 1-3 * | 1-16 | |
| X | US 6 555 623 B1 (YANG LAU S [US] ET AL) 29 April 2003 (2003-04-29) * claims 1-24; examples 1-13 * | 1-16 | |
| X | WO 02/08298 A (FOSTER MILLER INC [US]) 31 January 2002 (2002-01-31) * claims 1-32; examples 1-5 * | 1-16 | |
| X | EP 1 167 418 A (NANO CARRIER CO [JP] NANOCARRIER CO LTD [JP]) 2 January 2002 (2002-01-02) * claims 1-17; examples 1-3 * | 1-16 | |
| | | | TECHNICAL FIELDS SEARCHED (IPC) |
| X | EP 0 273 522 A (SHELL INT RESEARCH [NL]) 6 July 1988 (1988-07-06) * claims 1-22; examples 1-4 * | 1-16 | C08G C08F C09D B41M D21H |
| X | US 4 275 176 A (LOGIN ROBERT B) 23 June 1981 (1981-06-23) * claims 1-17; examples 1-12 * | 1-16 | |
| X | FR 2 351 154 A (PPG INDUSTRIES INC [US]) 9 December 1977 (1977-12-09) * claims 1-18; examples 1-52 * | 1-16 | |
| X | US 3 660 528 A (KOSTENKO ALLA ELISBAROVNA ET AL) 2 May 1972 (1972-05-02) * claims 1-9; examples 1-12 * | 1-16 | |

The present search report has been drawn up for all claims

| Place of search | Date of completion of the search | Examiner |
|---|---|---|
| Munich | 17 June 2009 | Glomm, Bernhard |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 09 15 1266

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2009

| Patent document cited in search report | Publication date | Patent family member(s) | Publication date |
|---|---|---|---|
| US 2008227925 A1 | 18-09-2008 | NONE | |
| US 6699945 B1 | 02-03-2004 | AU 2003297258 A1 | 23-06-2004 |
| | | CA 2507257 A1 | 17-06-2004 |
| | | EP 1573106 A1 | 14-09-2005 |
| | | MX PA05005929 A | 18-08-2005 |
| | | NZ 540227 A | 28-09-2007 |
| | | WO 2004050978 A1 | 17-06-2004 |
| US 6555623 B1 | 29-04-2003 | AU 2003217900 A1 | 08-10-2003 |
| | | BR 0308512 A | 04-01-2005 |
| | | CA 2479130 A1 | 02-10-2003 |
| | | EP 1495062 A1 | 12-01-2005 |
| | | MX PA04009015 A | 26-11-2004 |
| | | WO 03080704 A1 | 02-10-2003 |
| WO 0208298 A | 31-01-2002 | EP 1309630 A1 | 14-05-2003 |
| EP 1167418 A | 02-01-2002 | DE 69921366 D1 | 25-11-2004 |
| | | DE 69921366 T2 | 16-02-2006 |
| | | WO 9957174 A1 | 11-11-1999 |
| | | US 6388041 B1 | 14-05-2002 |
| EP 0273522 A | 06-07-1988 | AT 106915 T | 15-06-1994 |
| | | AU 598084 B2 | 14-06-1990 |
| | | AU 8313087 A | 07-07-1988 |
| | | CA 1293572 C | 24-12-1991 |
| | | DE 3750031 D1 | 14-07-1994 |
| | | DE 3750031 T2 | 29-09-1994 |
| | | DK 649687 A | 01-07-1988 |
| | | ES 2054656 T3 | 16-08-1994 |
| | | JP 2665663 B2 | 22-10-1997 |
| | | JP 63186718 A | 02-08-1988 |
| | | US 4775718 A | 04-10-1988 |
| US 4275176 A | 23-06-1981 | NONE | |
| FR 2351154 A | 09-12-1977 | CA 1069638 A1 | 08-01-1980 |
| | | DE 2714039 A1 | 17-11-1977 |
| | | IT 1068743 B | 21-03-1985 |
| | | JP 52139188 A | 19-11-1977 |
| US 3660528 A | 02-05-1972 | GB 1272054 A | 26-04-1972 |

EPO FORM P0459

For more details about this annex : see Official Journal of the European Patent Office, No. 12/82